(19)

Europäisches
Patentamt
European
Patent Office
Office européen
des brevets

(11) **EP 4 521 174 A1**

(12) **EUROPEAN PATENT APPLICATION**

(43) Date of publication:
**12.03.2025 Bulletin 2025/11**

(21) Application number: **23195776.2**

(22) Date of filing: **06.09.2023**

(51) International Patent Classification (IPC):
**G05B 13/02** *(2006.01)* **G05B 13/04** *(2006.01)*

(52) Cooperative Patent Classification (CPC):
**G05B 13/048; G05B 13/027**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Look, Andreas
91077 Kleinsendelbach (DE)**
• **Rakitsch, Barbara
70193 Stuttgart (DE)**

Remarks:
Amended claims in accordance with Rule 137(2)
EPC.

(54) **MODEL-PREDICTIVE CONTROL OF A TECHNICAL SYSTEM**

(57) The presently disclosed subject matter provides a state-space model which is comprised of one or more neural networks. The state-space model is configured to stochastically model a technical system by modelling uncertainties both in latent states of the technical system and in weights of the one or more neural networks. Thereby, the state-space model may be able to capture both aleatoric uncertainty (inherent unpredictability in observations) and epistemic uncertainty (uncertainty in the model's parameters or weights. During the training and during subsequent use for model-predictive control, moment matching across neural network layers is used, which may ensure that the model's predictions are consistent and close to real system behavior. The above measures may improve the control and safety of many technical systems.

EP 4 521 174 A1

Fig. 3

## Description

### Field of the invention

The presently disclosed subject matter relates to a system and computer-implemented method for generating a state-space model of a technical system to enable model-predictive control of the technical system, to a system and computer-implemented control method for model-predictive control of the technical system, to the technical system comprising the aforementioned system as a control system, and to a computer-readable medium comprising data representing instructions arranged to cause a processor system to perform any of the computer-implemented methods.

### Background of the invention

In recent times, the ability to control technical systems has emerged as an indispensable aspect of numerous industries and applications. One illustrative example can be found in the automotive sector, where the operation and coordination of complex systems like adaptive cruise control, lane-keeping assist, and automatic emergency braking are crucial for ensuring the safety of the vehicle's occupants and other road users. Another illustrative example is in the realm of industrial robotics, where precise control mechanisms are essential to prevent catastrophic failures that could result in considerable damage, financial losses, or even human injury.

Model-predictive control (MPC) is an advanced method of process control that may use an optimization algorithm to obtain the optimal control inputs that will drive a system's output to follow a desired trajectory over a future time horizon. Central to the success of MPC is the utilization of accurate models to predict future system outputs, for example based on hypothetical future control inputs. Within this domain, state-space models have been the widely used for representing and analysing the dynamics of technical system. These state-space models may thus be used to represent a dynamic system, which may be the technical system itself and/or its interaction with its environment, by defining its state variables and the relationships between the state variables, enabling predictions of future states based on current and past states and inputs. Recently, there has been a growing interest in augmenting state-space models using machine learning techniques, especially neural networks. Such neural network-based state-space models can automatically learn intricate system behaviours from data, potentially capturing non-linearities and complexities that might be difficult or impractical to model using traditional methods.

However, despite the advances in state-space modelling techniques, current models face challenges in representing certain types of uncertainties inherent to real-world systems. Specifically, they often struggle to simultaneously capture both aleatoric and epistemic uncertainties. Aleatoric uncertainty, sometimes known as intrinsic uncertainty, arises from inherent variability or randomness in a system or its environment. For instance, the variability in the material properties of manufactured parts or the unpredictability of wind gusts affecting a drone's flight are examples of aleatoric uncertainty. On the other hand, epistemic uncertainty, sometimes referred to as model uncertainty, stems from the lack of knowledge about the system to be modelled. This might arise from missing data, approximation errors in modelling, or other unknown factors. The ability to capture both types of uncertainties in a state-space model is highly desirable as it may ensure more robust predictions, especially in safety-critical applications. For example, in scenarios where a model is used to predict potential hazards, understanding both the inherent variability of the system and the potential unknown factors can lead to better, safer control decisions.

### Summary of the Invention

In accordance with a first aspect of the invention, as defined by claim 1, a computer-implemented method is provided for generating a state-space model of a technical system to enable model-predictive control of the technical system. In accordance with a further aspect of the invention, as defined by claim 8, a computer-implemented method is provided for model-predictive control of a technical system. In accordance with a further aspect of the invention, a computer-readable medium is provided as defined by claim 11. In accordance with a further aspect of the invention, as defined by claim 12, a training system is provided for training a state-space model to enable model-predictive control of a technical system. In accordance with a further aspect of the invention, as defined by claim 13, a control system is provided for model-predictive control of a technical system. In accordance with a further aspect of the invention, as defined by claim 15, a technical system is provided comprising the control system.

The above measures involve generating a state-space model of a technical system and using the state-space model in model-predictive control of the technical system. The technical system, which may for example be a computer-controlled machine or a component thereof, may thus be controlled based on the generated state-space model. As is known per se, a state-space model may be a mathematical representation of a system wherein the system's behavior may be characterized by a set of state variables and the relationships between the state variables, capturing the evolution of these variables over time based on both internal dynamics and external inputs. The state-space model may thus capture internal as well as external behavior of a technical system, with the term 'external behavior' including interactions of the technical system with its environment.

The above measures involve integrating neural networks and state-space models to facilitate advanced model-predictive control (MPC) of technical systems.

During the training phase, a state-space model is generated to model the technical system, to be used in model-predictive control of the technical system. The state-space model employs one or more neural networks to represent both the transition function, which delineates how a technical system progresses from one state to the next, and the observation function, linking the technical system's underlying state to discernible outputs. For the training, partial observations of the system's concealed, or latent, state across diverse time intervals may be used, for example in the form of sensor data.

The state-space model may be specifically configured to stochastically represent the technical system, encapsulating uncertainties in both the hidden states and the neural network parameters, and specifically its weights. For that purpose, the state-space model uses an augmented state which combines, e.g., by concatenation, the system's latent state with the weights of the neural network(s). The transition function and the observation function may thus be modified to apply to the augmented state.

Furthermore, both the transition and observation functions, as well as the filtering distribution which is used in prediction and update phases of the training, may be approximated by respective normal density functions. This approach may also be referred to 'assumed density' approximation, in that each of these functions may be assumed to have a normal density distribution. The parameters of the normal distribution, which may comprise the mean (or first moment) and the variance (or second moment), may be recursively adjusted at each time step of the training by using moment matching across the neural network layers, thereby ensuring that predictions by the state-space model sufficiently match actual observed data.

After the initial training phase, the trained state-space model may be used to control the technical system based on sensor data. The sensor data may provide past observations of the hidden state at different times. Based on this sensor data, the state-space model may be employed to make a prediction about the current or future hidden state of the technical system, and again, this prediction may be given as a partial observation. To generate this prediction, a predictive distribution may be generated, which may be considered as an estimate of possible current or future states. The predictive distribution may be generated based on the transition and observation functions and the filtering distribution, all applied using the moment matching method across neural network layers. The prediction may then be used to control the technical system, e.g., by controlling an actuator of or acting upon the technical system.

The above measures enable the state-space model to capture both aleatoric uncertainty (inherent unpredictability in observations) and epistemic uncertainty (uncertainty in the model parameters, and specifically its weights). By stochastically modeling both the latent states of the technical system and the weights of the neural networks, the state-space model offers a more comprehensive portrayal of the real-world dynamics and uncertainties of the system. Namely, the state-space model may not only capture aleatoric uncertainty by way of capturing the probability distribution, and thus uncertainty, across the latent states but also epistemic uncertainty by capturing the probability distribution, and thus uncertainty, across the neural network weights. Moreover, by using neural networks with state-space models, a more detailed picture of technical system behavior may be given. Namely, neural networks are good at showing complex relationships, which can be hard with traditional models. Overall, the above measures may improve the control and safety of many technical systems.

It is noted that it is known to capture aleatoric uncertainty and epistemic uncertainty by way of sampling, e.g., by executing a model several times and constructing a prediction probability distribution from the resulting output. However, executing a model several times may be computationally expensive. Advantageously, the above measures, which may be considered as representing a sampling-free approach, may avoid the computational complexity of the aforementioned sampling-based approach.

The following aspects may be described within the context of the computer-implemented method for generating the state-space model but may equally apply to the training system, mutatis mutandis. In addition, although described for the training, the following aspects may denote corresponding limitations of the computer-implemented method and control system for model-predictive control of a technical system.

In an embodiment, the method further comprises providing and training a separate neural network to represent each of the first moment and second moment of the transition function and each of the first moment and second moment of the observation function. The state-space model may thus comprise at least four neural networks, namely a first neural network to represent the mean of the transition function, a second neural network to represent the variance of the transition function, a third neural network to represent the mean of the observation function, and a fourth neural network to represent the variance of the observation function. This may provide specialization, in that each network may be specialized to capture the characteristics of the specific moment it represents.

In an embodiment, the method further comprises resampling the weights of the one or more neural networks at each time step. In the state-space model, the number of weights may exceed the number of latent dimensions. Training and using the state-space model may comprise computing a cross-covariance between the latent state and the weights.

This covariance may become zero when resampling step at each time step. Consequently, when resampling the weights at each time step, runtime and memory complexity may be reduced compared to when omitting the resampling.

In an embodiment, the method further comprises comprising sampling the weights of the one or more neural networks at an initial time step while omitting resampling the weights at subsequent time steps.

In an embodiment, the method further comprises using a deterministic training objective during the training, for example based on a type II maximum a posteriori criterion. This objective may also be referred to as predictive variational Bayesian inference as it may directly minimize the Kullback-Leibler divergence between the true data generating distribution and the predictive distribution, which is to be learned. Advantageously, compared to other learning objectives, better predictive performance may be obtained, more robustness to model misspecification, and a beneficial implicit regularization effect may be provided for an over-parameterized state-space model.

In an embodiment, the method further comprises:

- determining a predictive distribution as an integral function of the transition function, the observation function, and the filtering distribution and by using moment matching across neural network layers;
- deriving a prediction uncertainty from the predictive distribution;
- if the prediction uncertainty exceeds a threshold, prompting or exploring for additional training data to reduce the prediction uncertainty.

In accordance with the above measures, a prediction uncertainty may be determined from the predictive distribution. Since it is generally not desirable for the prediction uncertainty to be high, additional training data may be provided, e.g., by the user or obtained in an automatic manner, if the prediction uncertainty exceeds a threshold.

In an embodiment, the training data comprises one or more time-series of sensor data representing the partial observations of the latent state of the technical system, wherein the sensor data is obtained from an internal sensor of the technical system and/or from an external sensor observing the technical system or an environment of the technical system.

The following aspects may be described within the context of the computer-implemented method for model-predictive control of a technical system but may equally apply to the control system, mutatis mutandis. In addition, although described for the control, the following aspects may denote corresponding limitations of the computer-implemented method and training system for training the state-space model.

In an embodiment, the method further comprises deriving a prediction uncertainty from the predictive distribution, wherein the control of the technical system is further based on the prediction uncertainty. By determining the predicted uncertainty, the manner in which the prediction is used in the control of the technical system may be adjusted. For example, in case of high uncertainty, the system may be controlled more conservatively, e.g., in a manner in which the consequences of a wrong prediction have less impact.

In an embodiment, the method further comprises, if the prediction uncertainty exceeds a threshold:

- refraining from performing an action associated with the prediction;
- operating the technical system in a safe mode;
- triggering an alert;
- increasing a sampling rate of the sensor data; and/or
- switching from the model-predictive control to another type of control.

It will be appreciated by those skilled in the art that two or more of the above-mentioned embodiments, implementations, and/or optional aspects of the invention may be combined in any way deemed useful.

Modifications and variations of any system, method, or computer program, which correspond to the described modifications and variations of another one of said entities, can be carried out by a person skilled in the art on the basis of the present description.

## Brief description of the drawings

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

**Fig. 1** shows a training system for training a state-space model to enable model-predictive control of a technical system;

**Fig. 2** shows steps of a computer-implemented method for training a state-space model to enable model-predictive control of a technical system;

**Fig. 3** shows a control system for model-predictive control of a technical system using a trained state-space model;

**Fig. 4** shows the control system configured to control a (semi)autonomous vehicle based on a prediction of a state of the vehicle and/or its environment;

**Fig. 5** shows steps of a computer-implemented method for model-predictive control of a technical system using a trained state-space model;

**Fig. 6** shows a computer-readable medium comprising data;

**Fig. 7** shows a comparison between a deterministic approximation scheme for a state of a dynamical system and a Monte Carlo simulation;

**Fig. 8** shows a comparison between a filtering distribution of the deterministic approximation scheme and the true latent state;

**Fig. 9** is similar to Fig. 7 but shows the deterministic approximation scheme which includes resampling of weights at each time step;

**Fig. 10** shows a runtime of the deterministic approximation scheme as a function of dimensionality for a deterministic approximation scheme which includes resampling of weights at each time step and a Monte Carlo simulation;

**Fig. 11** is similar to Fig. 10 but shows the approximation scheme without resampling of weights at each time step; and

**Figs. 12A-12C** show epistemic uncertainty as a function of noise level;

It should be noted that the figures are purely diagrammatic and not drawn to scale. In the figures, elements which correspond to elements already described may have the same reference numerals.

**Reference signs list**

The following list of references and abbreviations is provided for facilitating the interpretation of the drawings and shall not be construed as limiting the claims.

100     training system for training state-space model
120     processor subsystem
140     data storage interface
150     data storage
152     training data
154     data representation of state-space model
200     method of training state-space model
210     providing state-space model
220     providing training data
230     training state-space model on training data
240     moment propagation for transition function
245     moment propagation for observation function
250     moment propagation for filtering distribution

300     control system for model-predictive control using state-space model
320     processor subsystem
340     data storage interface
350     data storage
352     data representation of state-space model
360     sensor data interface
362     sensor data
370     control interface

372     control data

400     environment
410     (semi)autonomous vehicle
420     sensor
422     camera
430     actuator
432     electric motor

500     method for model-predictive control using state-space model
510     providing state-space model
520     obtaining sensor data
530     generating prediction of state of technical system
540     controlling technical system based on prediction

600     non-transitory computer-readable medium
610     data

700         time
710         value
720-724     assumed density approximation
730-734     monte carlo simulation
740-744     95% confidence interval

800         dimensionality
810         time
820         number of particles
830-832     deterministic local
840-842     deterministic global

900-904     expected value of learned mean function
910-914     true mean function
920-924     95% confidence interval

## Detailed description of embodiments

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

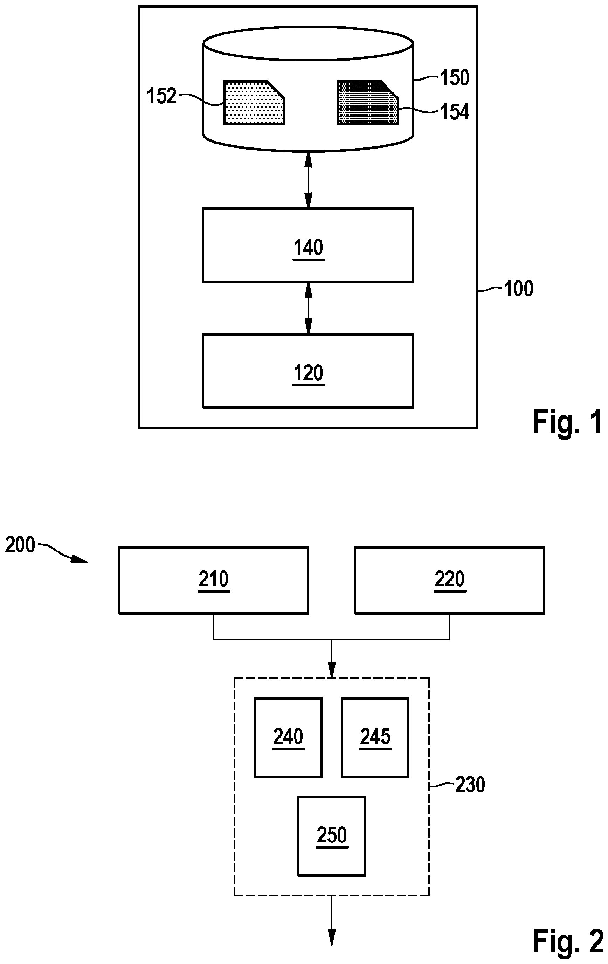

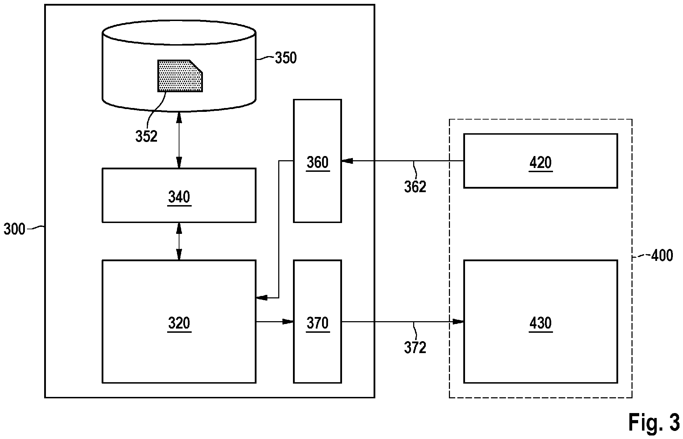

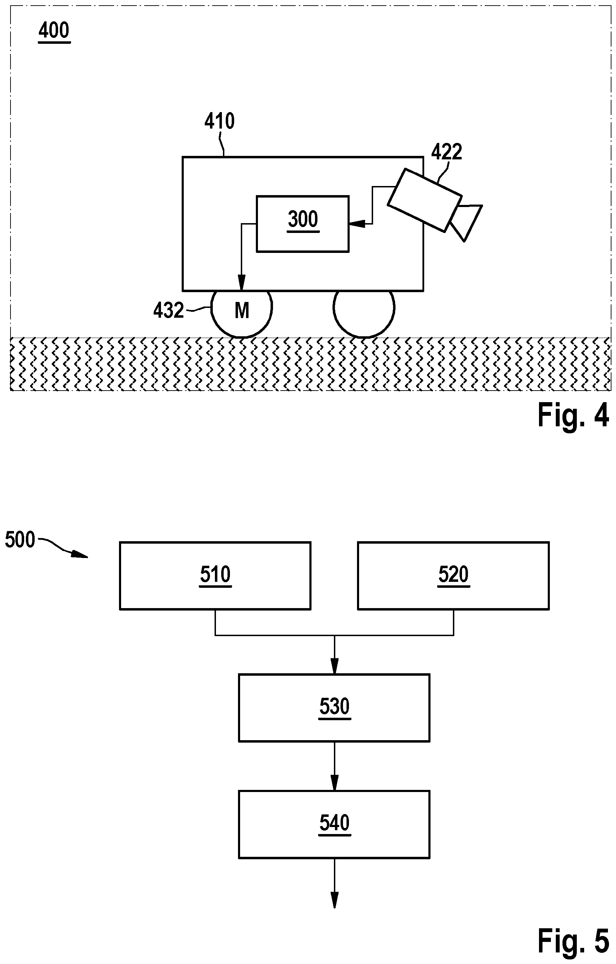

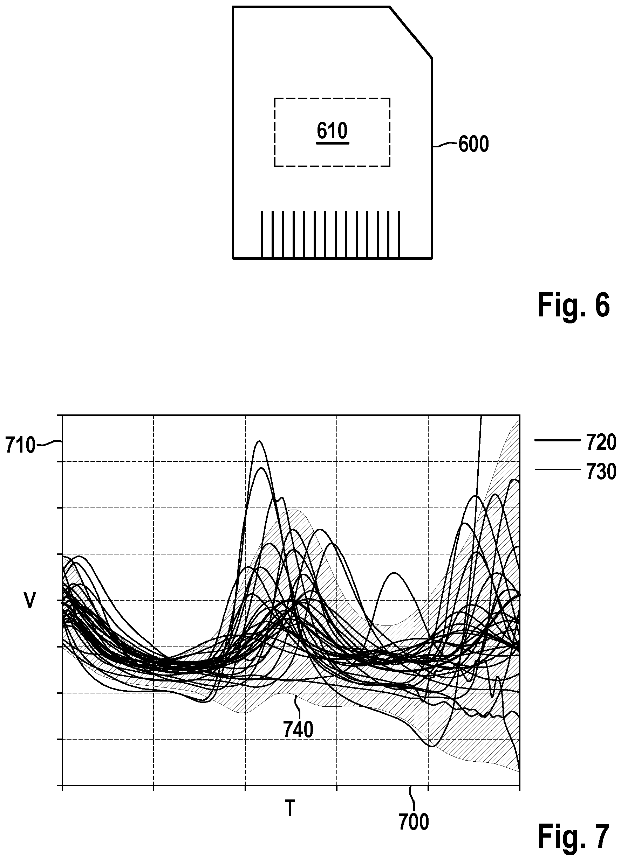

The following describes with reference to Figs. 1 and 2 a system and computer-implemented method for generating a state-space model of a technical system to enable model-predictive control of the technical system, with reference to Figs. 3 and 5 a system and computer-implemented method for model-predictive control of the technical system, and with reference to Fig. 4 an (semi)autonomous vehicle incorporating the system of Fig. 3. Fig. 6 shows a computer-readable medium used in embodiments of the invention as claimed. Figs. 7-12C illustrate performance aspects of the state-space model.

**Fig. 1** shows a system 100 for generating a state-space model of a technical system to enable model-predictive control of the technical system. The system 100, which may also be referred to as a training system, may comprise an input interface subsystem for accessing training data 152 for training an untrained or partially trained state-space model so as to train the state-space model for use in model-predictive control of the technical system. As will be discussed in detail elsewhere in this specification, the training data may comprise partial observations of a latent state of the technical system at a plurality of time steps. As illustrated in Fig. 1, the input interface subsystem may comprise or be constituted by a data storage interface 140 which may provide access to training data 152 on a data storage 150. For example, the data storage interface 140 may be a memory interface or a persistent storage interface, e.g., a hard disk or a solid-state disk interface, but also a personal, local, or wide area network interface such as a Wi-Fi interface or an ethernet or fiberoptic interface. The data storage 150 may be an internal data storage of the system 100, such as a memory, hard drive, or SSD, but also an external, e.g., network-accessible data storage.

In some embodiments, the data storage 150 may further comprise a data representation 154 of the state-space model, which will be discussed in detail in the following and which may be accessed by the system 100 from the data storage 150. The state-space model may be comprised of one or more neural networks to represent a transition function and an observation function of the state-space model. For example, for each function, a separate neural network may be provided. As previously elucidated, the data representation 154 of the state-space model may represent an untrained or partially trained state-space model, in that parameters of the model, such as the weights of the neural network(s), may still be further optimized. It will be appreciated that the training data 152 and the data representation 154 of the state-space model may also each be accessed from a different data storage, e.g., via different data storage interfaces. Each data storage interface may be of a type as is described above for the data storage interface 140. In other embodiments, the data representation 154 of the state-space model may be internally generated by the system 100, for example on the basis of design parameters or a design specification, and therefore may not explicitly be stored on the data storage 150.

The system 100 may further comprise a processor subsystem 120 which may be configured to, during operation of the system 100, train the state-space model on the training data 152. In particular, the system 100 may train the state-space model on the training data to be able to predict a latent state of the technical system based on past partial observations. The prediction of the latent state may be in form of a partial observation of the latent state. The state-space model may be configured to stochastically model the technical system by modelling uncertainties both in latent states of the technical system and in weights of the one or more neural networks. For that purpose, the transition function may be configured to map an augmented state to a next augmented state at a following time step, wherein the augmented state is comprised of a latent state of the technical system and weights of the one or more neural networks. Moreover, the observation function may be configured to map the augmented state to a partial observation, and a filtering distribution, which may be used during prediction and update steps of the training, may be configured to represent a distribution of the augmented state. The transition function, the observation function, and the filtering distribution may each be approximated by a normal probability distribution. The training may comprise recursively calculating a first and second moment of each of the transition function, the observation function, and the filtering distribution at each time step by moment matching across neural network layers.

These and other aspects of the training of the state-space model may be further elucidated with reference to Figs. 7-12C.

The system 100 may further comprise an output interface for outputting a data representation of the trained state-space model. For example, as also illustrated in Fig. 1, the output interface may be constituted by the data storage interface 140, with said interface being in these embodiments an input/output ('IO') interface via which the trained scale estimator may be stored in the data storage 150. For example, the data representation 154 defining the untrained state-space model may during or after the training be replaced, at least in part, by a data representation of the trained state-space model, in that the parameters of the state-space model 154 may be adapted to reflect the training on the training data 152. In other embodiments, the data representation of the trained state-space model may be stored separately from the data representation 154 of the 'untrained' state-space model. In some embodiments, the output interface may be separate from the data storage interface 140 but may in general be of a type as described above.

**Fig. 2** shows a computer-implemented method 200 for generating a state-space model of a technical system to enable model-predictive control of the technical system. The method 200 may correspond to an operation of the system 100 of Fig. 1, but does not need to, in that it may also correspond to an operation of another type of system, apparatus, device or entity or in that it may correspond to steps of a computer program. The method 200 is shown to comprise, in a step titled "PROVIDING STATE-SPACE MODEL", providing 210 a state-space model, and in a step titled "PROVIDING TRAINING DATA", providing 220 training data. Each of the state-space model and the training data may be of a type as described elsewhere in this specification. The method 200 may further comprise, in a step titled "TRAINING STATE-SPACE MODEL ON TRAINING DATA", training 230 the state-space model on the training data to be able to predict a latent state of the technical system based on past partial observations, wherein said prediction of the latent state is in form of a partial observation of the latent state. The training 230 may comprise, in a step titled "MOMENT PROPAGATION FOR TRANSITION FUNCTION", moment propagation 240 for the transition function across neural network layers at each time step of the training, in a step titled "MOMENT PROPAGATION FOR OBSERVATION FUNCTION", moment propagation 245 for the observation function across neural network layers at each time step, and in a step titled "MOMENT PROPAGATION FOR FILTERING DISTRIBUTION", moment propagation 250 for the filtering distribution across neural network layers at each time step.

**Fig. 3** shows a system 300 for model-predictive control using a trained state-space model as described elsewhere in this specification. In particular, the system 300 may be configured to control a technical system and may therefore also be referred to as a control system. The system 300 may comprise an input interface subsystem for accessing data representations of the state-space model. For example, as also illustrated in Fig. 3, the input interface subsystem may comprise a data storage interface 340 to a data storage 350 which may comprise a data representation 352 of the state-space model. In some examples, the data storage interface 340 and the data storage 350 may be of a same type as described with reference to Fig. 1 for the data storage interface 140 and the data storage 150.

The system 300 may further comprise a processor subsystem 320 which may be configured to, during operation of the system 300, obtain sensor data representing past partial observations of a latent state of the technical system at a plurality of time steps, generate a prediction of a latent state of the technical system, in form of a prediction of a partial observation of the latent state, based on the past partial observations. The processor subsystem 320 may be further configured to generate the prediction by approximating a predictive distribution as an integral function of the transition function, the observation function, and the filtering distribution and by using moment matching across neural network layers, and deriving the prediction from the predictive distribution. The processor subsystem 320 may be further configured to control the technical system based on the prediction.

Fig. 3 further shows various optional components of the system 300. For example, in some embodiments, the system 300 may comprise a sensor data interface 360 for accessing sensor data 362 acquired by a sensor 420. The sensor 420 may for example be an internal sensor of the technical system (not shown in Fig. 3) or an external sensor. The sensor 420 may observe the technical system and/or its environment 400 and may thereby provide an at least partial observation of the state of the technical system. The sensor 420 may have any suitable form, such as an image, lidar, radar, temperature, pressure, proximity, light, humidity, motion, infrared, ultrasonic, voltage, or current sensor. In some embodiments, the system 300 may access sensor data of a plurality of sensors. The plurality of sensors may comprise different types of the aforementioned types of sensors. The sensor data interface 360 may have any suitable form corresponding in type to the type of sensor(s), including but not limited to a low-level communication interface, an electronic bus, etc. In some examples, the system 300 may access the sensor data 362 from a data storage. In such examples, the sensor data interface 360 may be a data storage interface, for example of a type as described above for the data storage interface 140 of Fig. 1.

In some embodiments, the system 300 may comprise an output interface, such as a control interface 370 for providing control data 372 to for example an actuator 430. The actuator 430 may be an actuator of the technical system or may be provided in the environment 400 and may be configured to act upon the technical system. The control data 372 may be generated by the processor subsystem 320 to control the actuator 430 based on a prediction of the state of the technical system. For example, the actuator 430 may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, stepper motors, etc. Thereby, the system 300 may act in response to the prediction of the state of the technical system, for example to control a technical system in the form of a computer-controlled machine, such as a robotic system, a vehicle, a domestic appliance, a power tool, a manufacturing machine, a personal assistant, or an access control system.

In other embodiments (not shown in Fig. 3), the system 300 may comprise an output interface to a rendering device, such as a display, a light source, a loudspeaker, a vibration motor, etc., which may be used to generate a sensory perceptible output signal which may be generated based on the predicted state of the technical system. The sensory perceptible output signal may be directly indicative of the predicted state of the technical system but may also represent a derived sensory perceptible output signal. Using the rendering device, the system 300 may provide sensory perceptible feedback to a user.

In general, each system described in this specification, including but not limited to the system 100 of Fig. 1 and the system 300 of Fig. 3, may be embodied as, or in, a single device or apparatus. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units, such as Graphical Processing Units (GPUs). The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA), or as an Application Specific Integrated Circuit (ASIC). In general, each functional unit of the respective system may be implemented in the form of a circuit. The respective system may also be implemented in a distributed manner, e.g., involving different devices or apparatuses, such as distributed local or cloud-based servers. In some embodiments, the system 300 may be an internal component of the technical system which is to be controlled.

Fig. 4 shows an example of the above, in that the system 300 is shown to be a control system of a (semi-) autonomous vehicle 410 operating in an environment 400. The autonomous vehicle 400 may incorporate the system 300 to control aspects such as the steering and the braking of the autonomous vehicle based on sensor data obtained from a camera 422 integrated into the vehicle 400. For example, the system 300 may control an electric motor 432 to steer the autonomous vehicle 300 to a safe location in case the autonomous vehicle is predicted to suffer from a breakdown in the near future.

Fig. 5 shows a computer-implemented method 500 for model-predictive control of a technical system. The method 500 may correspond to an operation of the system 300 of Fig. 3 but may also be performed using or by any other system, machine, apparatus, or device. The method 500 is shown to comprise, in a step titled "PROVIDING STATE-SPACE MODEL", providing 510 a state-space model of a type and having been trained in a manner as described elsewhere in this specification, in a step titled "OBTAINING SENSOR DATA", obtaining 520 sensor data representing past partial observations of a latent state of the technical system at a plurality of time steps, in a step titled "GENERATING PREDICTION OF STATE OF TECHNICAL SYSTEM", generating 530 a prediction of a latent state of the technical system, in form of a prediction of a partial observation of the latent state, based on the past partial observations, wherein generating the prediction comprises approximating a predictive distribution as an integral function of the transition function, the observation function, and the filtering distribution and by using moment matching across neural network layers, and deriving the prediction from the predictive distribution, and in a step titled "CONTROLLING TECHNICAL SYSTEM BASED ON PREDICTION", controlling 540 the technical system based on the prediction.

It will be appreciated that, in general, the operations or steps of the computer-implemented methods 200 and 500 of respectively Figs. 2 and 5 may be performed in any suitable order, e.g., consecutively, simultaneously, or a combination thereof, subject to, where applicable, a particular order being necessitated, e.g., by input/output relations.

Each method, algorithm or pseudo-code described in this specification may be implemented on a computer as a computer implemented method, as dedicated hardware, or as a combination of both. As also illustrated in **Fig. 6,** instructions for the computer, e.g., executable code, may be stored on a computer-readable medium 600, e.g., as data 610 and in form of a series 610 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, servers, online software, etc. Fig. 6 shows a memory card 600. In an alternative embodiment, the computer-readable medium 600 may comprise as the stored data 610 the data representation of the trained state-space model as described elsewhere in this specification.

With further reference to the state-space model and the training and subsequent use (e.g., for inference), the following is noted.

*Modelling unknown dynamics from data.* Modeling unknown dynamics, for example the internal dynamics of a technical system and/or the dynamics of a technical system interacting with its environment, from data is challenging, as it may involve accounting for both the intrinsic uncertainty of the underlying process and the uncertainty over the model parameters. Parameter uncertainty, or epistemic uncertainty, may be used to address the uncertainty arising from incomplete data. Intrinsic uncertainty, also known as aleatoric uncertainty, may be used to represent the inherent stochasticity of the system.

(Deep) state-space models may offer a principled solution for modeling the intrinsic uncertainty of an unidentified dynamical process. Such deep state-space models may assign a latent variable to each data point, which represents the underlying state and changes over time while considering uncertainties in both observations and state transitions. Neural networks with deterministic weights may describe the nonlinear relationships between latent states and observations. Despite offering considerable model flexibility, these deterministic weights may limit the models' ability to capture epistemic uncertainty.

On the other hand, known approaches that take weight uncertainty into account make either the simplifying assumption that the transition dynamics are noiseless or that the dynamics are fully observed. Both assumptions are not satisfied by many real-world applications and may lead to miscalibrated uncertainties.

Other approaches use Gaussian Processes to model state transition kernels instead of probabilistic neural networks. While these approaches may respect both sources of uncertainty, they do not scale well with the size of the latent space. Finally, there is the notable exception of "Normalizing Kalman Filters for Multivariate Time Series Analysis," by de Bézenac et al., in NeurIPS, 2020, that aims at learning deep dynamical systems that respect both sources of uncertainty jointly. However, this approach requires marginalizing over the latent temporal states and the neural network weights via plain Monte Carlo, which is infeasible for noisy transition dynamics.

The following measures address the problem of learning dynamical models that account for epistemic and aleatoric uncertainty. These measures allow for epistemic uncertainty by attaching uncertainty to the neural net weights and for aleatoric uncertainty by using a deep state-space formulation. While such a type of model promises flexible predictive distributions, inference may be doubly-intractable due to the uncertainty over the weights and the latent dynamics. To address this, a sample-free inference scheme is described that allows efficiently propagating uncertainties along a trajectory. This deterministic approximation is computationally efficient and may accurately capture the first two moments of the predictive distribution. This deterministic approximation may be used as a building block for multi-step ahead predictions and Gaussian filtering. Furthermore, the deterministic approximation may be used as a fully deterministic training objective.

The above measures particularly excel in demanding situations, such as those involving noisy transition dynamics or high-dimensional outputs.

**Fig. 7** shows a comparison between a deterministic approximation scheme for a state of a dynamical system and a Monte Carlo simulation thereof. This involves simulating a dynamical system $p(x_{t+1}|x_t, w_t)$, such as the inner workings of a technical system and/or the interaction of the technical system with its environment, with uncertainty over the weights $w_t \sim p(w_t)$. The prediction by the deterministic approximation scheme, which is described in this specification, is shown as a solid line 720 which depicts the mean while the shaded area 740 is the 95% confidence interval. This deterministic approximation scheme is compared to predictions by a Monte Carlo simulation 730 for multi-step ahead predictions. It can be seen that the deterministic approximation described in this specification accurately captures the first two moments of the Monte Carlo generated samples.

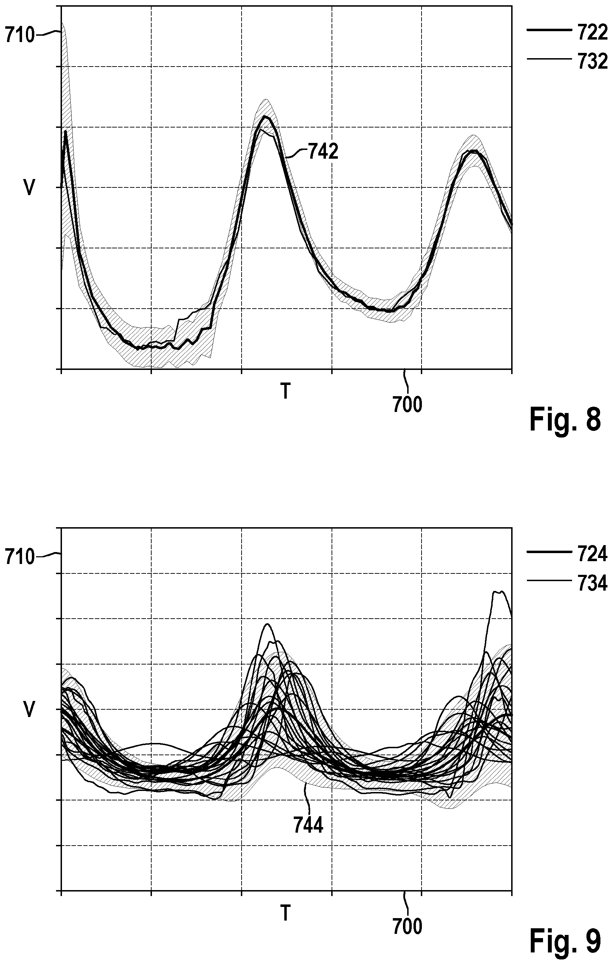

**Fig. 8** shows a comparison between a filtering distribution of the deterministic approximation scheme, e.g., an emission function $p(y_t|x_t)$, and the true latent state The filtering distribution, which is shown as a solid mean 722 which depicts the mean and a shaded area 742 which represents the 95% confidence interval, is compared to the true latent state 732. It can be seen that the true latent trajectory 732 lies within the 95% confidence interval 742 of the approximate filtering distribution.

*Deep State Space Models.* A state-space model (SSM) may describe a dynamical system that is partially observable, such as the aforementioned internal dynamics of a technical system and/or the dynamics of a technical system interacting with its environment. More formally, the true underlying process with latent state $x_t \in \mathbb{R}^{D_x}$ may emit at each time step $t$ an observation $y_t \in \mathbb{R}^{D_y}$. The latent dynamics may follow a Markovian structure, e.g., the state at time point $x_{t+1}$ may only depend on the state of the previous time point $x_t$.

More formally, the generative model of a SSM may be expressed as

$$x_0 \sim p(x_0), \quad (1)$$

$$x_{t+1} \sim p(x_{t+1}|x_t), \quad (2)$$

$$y_t \sim p(y_t|x_t). \quad (3)$$

Above, $p(x_0)$ is the initial distribution, $p(x_{t+1}|x_t)$ is the transition density, and $p(y_t|x_t)$ is the emission density.

A deep state-space model (DSSM) may be a SSM with neural transition and emission densities. Commonly, these densities may be modeled as input-dependent Gaussians.

*Assumed Density Approximation.* A $t$-step transition kernel may propagate the latent state forward in time and may be recursively computed as

$$p(x_{t+1}|x_0) = \int p(x_{t+1}|x_t)p(x_t|x_0)dx_t, \quad (4)$$

where $p(x_{t+1}|x_t)$ follows Eq. (2). Except for linear transition functions, there exists no analytical solution.

Various approximations to the transition kernel have been proposed that can be roughly divided into two groups: (a) *Monte Carlo* (MC) based approaches and (b) deterministic approximations based on *Assumed Densities* (AD). While MC based approaches can, in the limit of infinitely many samples, approximate arbitrarily complex distributions, they are often slow in practice, and their convergence is difficult to assess. In contrast, deterministic approaches often build on the assumption that the $t$-step transition kernel can be approximated by a Gaussian distribution. In the context of machine learning, AD approaches have been recently used in various applications such as deterministic variational inference or traffic forecasting.

The presently disclosed subject matter follows the AD approach and approximate the t-step transition kernel from Eq. (4) as

$$p(x_{t+1}|x_0) \approx \int p(x_{t+1}|x_t)\mathcal{N}(x_t|m_t^x, \Sigma_t^x)dx_t,$$

$$\approx \mathcal{N}(x_{t+1}|m_{t+1}^x, \Sigma_{t+1}^x). (5)$$

where the latent state $x_t$ may be recursively approximated as a Gaussian with mean $m_t^x \in \mathbb{R}^{D_x}$ and covariance $\Sigma_t^x \in \mathbb{R}^{D_x \times D_x}$. This simplifies the calculations for solving Eq. (5) to approximating the first two output moments. There exist generic approximation methods as well as specialized algorithms for DSSMs. The presently disclosed subject matter approximates the first two output moments via moment propagation across neural net layers.

*Gaussian Filtering.* In filtering applications, one may be interested in the distribution $p(x_t|y_{1:t})$, where $y_{1:t} = \{y_1, ..., y_t\}$ denotes the past observations. For deep state-space models, the filtering distribution is not tractable, and one may approximate its distribution with a general Gaussian filter by repeating the subsequent two steps over all time points. One may refer to $p(x_t|y_{1:t-1})$ as the prior and to $p(x_t, y_t|y_{1:t-1})$ as the joint prior.

*Prediction:* Approximate the prior $p(x_t|y_{1:t-1})$ with

$$p(x_t|y_{1:t-1}) = \int p(x_t|x_{t-1})p(x_{t-1}|y_{1:t-1})dx_{t-1},$$

$$\approx \int p(x_t|x_{t-1})\mathcal{N}(m_{t-1}^x, \Sigma_{t-1}^x)dx_{t-1},$$

$$\approx \mathcal{N}(m_{t|t-1}^x, \Sigma_{t|t-1}^x), \quad (6)$$

where $p(x_{t+1}|x_t)$ refers to the transition model defined in Eq. (2). One may arrive at Eq. (6) by multiple rounds of moment matching. First, one may approximate the filtering distribution as a normal distribution, and then one may approximate the one-step transition kernel as another normal. Here, the index $t|t'$ explicitly denotes prior moments, e.g., the moments at time step t conditioned on the observations up to time step $t'$. If $t = t'$, one may omit the double index.

*Update:* Approximate the joint prior $p(x_t, y_t|y_{1:t-1})$

$$p(x_t, y_t|y_{1:t-1}) = p(y_t|x_t)p(x_t|y_{1:t-1})$$

$$\approx p(y_t|x_t)\mathcal{N}(m_{t|t-1}^x, \Sigma_{t|t-1}^x)$$

$$\approx \mathcal{N}\left(\begin{bmatrix} m_{t|t-1}^x \\ m_{t|t-1}^y \end{bmatrix}, \begin{bmatrix} \Sigma_{t|t-1}^x & \Sigma_{t|t-1}^{xy} \\ \Sigma_{t|t-1}^{yx} & \Sigma_{t|t-1}^y \end{bmatrix}\right), \quad (7)$$

where $\Sigma_{t|t-1}^{xy} \in \mathbb{R}^{D_x \times D_y}$ is the cross-covariance between $x_t$ and $y_t$ and the density $p(y_t|x_t)$ may be defined in Eq. (3). Building a Gaussian approximation to the joint prior in Eq. (7) can be performed by similar moment matching schemes as discussed elsewhere. Afterwards, one may calculate the posterior $p(x_t|y_{1:t})$ by conditioning on the observation $y_t$

$$p(x_t|y_{1:t}) \approx \mathcal{N}(m_t^x, \Sigma_t^x), \quad (8)$$

where Eq. (8) can be obtained from Eq. (7) by standard Gaussian conditioning. The resulting distribution has the below moments

$$m_t^x = m_{t|t-1}^x + K_t(y_t - m_{t|t-1}^y), \quad (9)$$

$$\Sigma_t^x = \Sigma_{t|t-1}^x - K_t \Sigma_{t|t-1}^y K_t^\mathsf{T}, \quad (10)$$

where $K_t \in \mathbb{R}^{D_x \times D_y}$ is the Kalman gain

$$K_t = \Sigma_{t|t-1}^{xy} \left(\Sigma_{t|t-1}^y\right)^{-1}. (11)$$

*Probabilistic Deep State-Space Models.* The presently disclosed subject matter describes a probabilistic deep state-space model (ProDSSM). This model may account for epistemic uncertainty by attaching uncertainty to the weights of the neural network and for aleatoric uncertainty by building on the deep state-space formalism. By integrating both sources of uncertainties, this model family provides well-calibrated uncertainties. For the joint marginalization over the weights of the neural network and the latent dynamics, algorithms are presented in the following for assumed density approximations and for Gaussian filtering that jointly handle the latent states and the weights. Both algorithms are tailored towards ProDSSMs, allow for fast and sample-free inference with low compute, and lay the basis for the deterministic training objective.

*Uncertainty Weight Propagation.* Two variants of propagating the weight uncertainty along a trajectory may be used: a local and global approach. For the local approach, one may resample the weights $w_t \in \mathbb{R}^{D_w}$ at each time step. Contrarily, for the global approach, one may sample the weights only once at the initial time step and keep them fixed for all remaining time steps. Fig. 7 previously showed the prediction by the ProDSSM using the global approach while Fig. 9 shows the prediction by the ProDSSM using the local approach, that is with weight resampling at each timestep, as a solid line 744 which depicts the mean while the shaded area 740 is again the 95% confidence interval. As previously in Fig. 7, a Monte Carlo simulation 734 is again shown as reference.

Assuming Gaussian additive noise, the transition and emission model of ProDSSMs may be defined as follows

$$x_0 \sim p(x_0), \quad (12)$$

$$w_0 \sim p(w_0|\phi), \quad (13)$$

$$x_{t+1} \sim \mathcal{N}(x_{t+1}|f(x_t, w_t), \text{diag}(l(x_t, w_t))), \quad (14)$$

$$w_{t+1} \sim \begin{cases} p(w_{t+1}|\phi), & \text{if Local} \\ \delta(w_{t+1} - w_0), & \text{if Global} \end{cases} \quad (15)$$

$$y_t \sim \mathcal{N}(y_t|g(x_t), \text{diag}(r)), \quad (16)$$

where $f(x_t, w_t): \mathbb{R}^{D_x \times D_w} \to \mathbb{R}^{D_x}$ models the transition mean, $l(x_t, w_t): \mathbb{R}^{D_x \times D_w} \to \mathbb{R}^{D_x}_+$ the transition variance, $g(x_t): \mathbb{R}^{D_x} \to \mathbb{R}^{D_y}$ the mean emission, and $r \in \mathbb{R}^{D_y}_+$ the emission variance. One may further model the weight distribution $p(w_t|\phi)$ as a Gaussian distribution

$$p(w_t|\phi) = \mathcal{N}(w_t|m_t^w, \text{diag}(\Sigma_t^w)), \quad (17)$$

with mean $m_t^w \in \mathbb{R}^{D_w}$ and diagonal covariance $\Sigma_t^w \in \mathbb{R}^{D_w}_+$. Both together define the hyperparameters $\phi = \{m_t^w, \Sigma_t^w\}_{t=0}^T$ of the model, where $T$ is the horizon.

In order to avoid cluttered notation, one may introduce the augmented state $z_t = [x_t, w_t]$ that is a concatenation of the latent state $x_t$ and weight $w_t$, with dimensionality $D_z = D_x + D_w$. The augmented state $z_t$ may follow the transition density $\mathcal{N}(z_{t+1}|F(z_t), \text{diag}(L(z_t)))$, where the mean function $F(z_t): \mathbb{R}^{D_z} \to \mathbb{R}^{D_z}$ and the covariance function $L(z_t): \mathbb{R}^{D_z} \to \mathbb{R}^{D_z}_+$ are defined as

$$(F(z_t), L(z_t)) = \left( \begin{bmatrix} f(x_t, w_t) \\ m_{t+1}^w \end{bmatrix}, \begin{bmatrix} l(x_t, w_t) \\ \Sigma_{t+1}^w \end{bmatrix} \right) \text{if Local}$$

$$\left( \begin{bmatrix} f(x_t, w_t) \\ w_t \end{bmatrix}, \begin{bmatrix} l(x_t, w_t) \\ 0 \end{bmatrix} \right) \text{if Global.} \quad (18)$$

In the following, a moment matching algorithm is extended towards ProDSSMs and Gaussian filters. These algorithmic advances are general and can be combined with both weight uncertainties propagation schemes.

*Assumed Density Approximation.* The following describes an approximation to the t-step transition kernel $p(z_{t+1}|z_0)$ for ProDSSMs. This approximation takes an assumed density approach and propagates moments along time direction and across neural network layers. One may follow the general assumed density approach on the augmented state $z_t$. As a result, one may obtain a Gaussian approximation $p(z_{t+1}|z_0) \approx \mathcal{N}(z_{t+1}|m_{t+1}^z, \Sigma_{t+1}^z)$ to the t-step transition kernel that approximates the joint density over the latent state $x_t$ and the weights $w_t$. The mean and the covariance have the structure

$$m_t^z = \begin{bmatrix} m_t^x \\ m_t^w \end{bmatrix}, \Sigma_t^z = \begin{bmatrix} \Sigma_t^x & \Sigma_t^{xw} \\ \Sigma_t^{wx} & \Sigma_t^w \end{bmatrix} \qquad (19)$$

where $\Sigma_t^x \in \mathbb{R}^{D_x \times D_x}$ is the covariance of $x_t$ and $\Sigma_t^{xw} \in \mathbb{R}^{D_x \times D_w}$ is the cross-covariance between $x_t$ and $w_t$.

For a standard DSSM architecture, the number of weights may exceed the number of latent dimensions. Since the mean and the covariance over the weights are not updated over time, the computational burden of computing $\Sigma_t^z$ is dominated by the computation of the cross-covariance $\Sigma_t^{xw}$. This covariance becomes zero for the local approach due to the resampling step at each time point. Consequently, the local approach exhibits reduced runtime and memory complexity compared to the global approach.

The following describes how the remaining terms may be efficiently computed by propagating moments through the layers of a neural network. One may start by applying the law of unconscious statistician, which indicates that the moments of the augmented state at time step $t + 1$ are available as a function of prior moments at time step $t$

$$m_{t+1}^z = \mathbb{E}[F(z_t)], \Sigma_{t+1}^z = \text{Cov}[F(z_t)] + \text{diag}(\mathbb{E}[L(z_t)]) \qquad (20)$$

What remains is calculating the first two output moments of the augmented mean $F(z_t)$ and covariance update $L(z_t)$. In the following, the approximation of the output moments for the augmented $F(z_t)$ is discussed while an explicit discussion on the augmented covariance update $L(z_t)$ is omitted as its moments can be approximated similarly. Typically, neural networks are a composition of $L$ simple functions (layers) that allows one to write the output as $F(z_t) = U^L(...U^1(z_t^0)...)$, where $z_t^l \in \mathbb{R}^{D_z^l}$ is the augmented state at layer $l$ at time point $t$. One may denote the input as $z_t^0 = z_t$. The function $U^l(z_t^{l-1}): \mathbb{R}^{D_z^{l-1}} \to \mathbb{R}^{D_z^l}$ at the $l$-th layer receives the augmented state $z_t^{l-1}$ from the previous layer and calculates the output $z_t^l$ as

$$U^l(z_t^{l-1}) = \begin{bmatrix} x_t^l \\ w_t^l \end{bmatrix} = \begin{bmatrix} u^l(x_t^{l-1}, w_t^{l-1}) \\ w_t^{l-1} \end{bmatrix}, \quad (21)$$

$x_t^l \in \mathbb{R}^{D_x^l}$ is the state at layer $l$ at time point $t$ and $u^l(x_t^{l-1}, w_t^{l-1}): \mathbb{R}^{D_x^{l-1}} \times \mathbb{R}^{D_w} \to \mathbb{R}^{D_x^l}$ is the function that updates the state. The weights $w_t^l \in \mathbb{R}^{D_w}$ are not altered in the intermediate layers and the last layer returns the weight for the global approach or its mean $m_t^w$ for the local approach. One may approximate the output distribution of each layer recursively as

$$p(z_t^l) = p(U^l(z_t^{l-1})) \approx \mathcal{N}(z_t^l|m_t^l, \Sigma_t^l), \quad (22)$$

where $m_t^l \in \mathbb{R}^{D_z^l}$ and $\Sigma_t^l \in \mathbb{R}^{D_z^l \times D_z^l}$ are the mean and covariance of $z_t^l$. One may refer to calculating $m_t^l$ and

$\Sigma_t^l$ for each layer as layerwise moment propagation. In the following, the output moments for the linear layer and ReLU activation function for the global as well as local approach are presented.

*Output Moments of the Linear Layer.* A linear layer applies an affine transformation

$$U(z_t^l) = \begin{bmatrix} A_t^l x_t^l + b_t^l \\ w_t^l \end{bmatrix}, \quad (23)$$

where the transformation matrix $A_t^l \in \mathbb{R}^{D_x^{l+1} \times D_x^l}$ and bias $b_t^l \in \mathbb{R}^{D_x^{l+1}}$ are both part of weights $(A_t^l, b_t^l) \in w_t^l$. It is noted that the set of all transformation matrices and biases $\{(A_t^l, b_t^l)\}_{l=1}^L$ define the weights $w_t^l$. As the cross-covariance matrix $\Sigma_t^{l,xw}$ is non-zero for global weights, the transformation matrix $A_t^l$, bias $b_t^l$, and state $x_t^l$ are assumed to be jointly normally distributed.

The mean and the covariance of the weights $w_t$ are equal to the input moments due to the identity function. The remaining output moments of the affine transformation may be calculated as

$$m_t^{l+1,x} = \mathbb{E}[A_t^l x_t^l] + \mathbb{E}[b_t^l], \quad (24)$$

$$\Sigma_t^{l+1,x} = Cov[A_t^l x_t^l, A_t^l x^l] + Cov[b_t^l, A_t^l x_t^l]$$

$$+ Cov[A_t^l x_t^l, b_t^l] + Cov[b_t^l, b_t^l], \quad (25)$$

$$\Sigma_t^{l+1,xw} = Cov[A_t^l x_t^l, w^l] + Cov[b_t^l, w_t^l], \quad (26)$$

which is a direct result of the linearity of the $Cov[\bullet, \bullet]$ operator. In order to compute the above moments, one may need to calculate the moments of a product of correlated normal variables, $\mathbb{E}[A_t^l x_t^l], Cov[A_t^l x_t^l, A_t^l x_t^l]$, and $Cov[A_t^l x_t^l, w^l]$. Surprisingly, these computations can be performed in closed form for both local and global weights provided that $x_t^l$ and $w_t^l$ follow a normal distribution. For the case of local weights, the cross-covariance matrix $\Sigma_t^{l,xw}$ becomes zero, i.e., weights and states are uncorrelated. In addition, the computation of the remaining terms simplifies significantly.

*Output Moments of the ReLU Activation.* The ReLU activation function applies element-wise the max-operator to the latent states while the weights stay unaffected

$$U(z_t^l) = \begin{bmatrix} \max(0, x_t^l) \\ w_t^l \end{bmatrix}. \quad (27)$$

Mean $m_t^{l+1,x}$ and covariance $\Sigma_t^{l+1,x}$ of the state $x_t^{l+1}$ are available in related literature. Mean $m_t^{l+1,w}$ and covariance $\Sigma_t^{l+1,w}$ of the state $w_t^{l+1}$ are equal to the input moments, $m_t^{l,w}$ and $\Sigma_t^{l,w}$. For the case of global weights, it remains open to calculate the cross-covariance $\Sigma_t^{l+1,xw}$. Using Stein's lemma, one may calculate the cross-covariance after the ReLU activation as

$$\Sigma_t^{l+1,xw} = \mathbb{E}[\nabla_{x_t^l} \max(0, x_t^l)] \Sigma_t^{l,xw}, \quad (28)$$

where $\mathbb{E}[\nabla_{x_t^l}\max(0, x_t^l)]$ is the expected Jacobian of the ReLU activation. The expected Jacobian is equal to the expectation of the Heaviside function, which can be closely approximated.

*Gaussian Filtering.* The approximation to the filtering distribution, $p(z_t|y_{1:t})$, follows the Gaussian filter as previously described. The presently disclosed subject matter extent the filtering step to the augmented state consisting of the latent dynamics and the weights. In standard architectures, the number of latent states is small compared to the number of weights, which makes filtering in this new scenario more demanding. One may address this challenge by applying the deterministic moment matching scheme as described elsewhere in this specification that propagates moments across neural network layers. Additionally, one may combine this scheme with the previously derived approximation to the $t$-step transition kernel $p(z_{t+1}|z_0)$.

The Gaussian filter alternates between the prediction and the update step. The following describes in more detail how the deterministic moment matching scheme can be integrated into both steps. For the prediction step, Eq. (6), one may reuse the assumed density approach that is derived in order to compute a Gaussian approximation to the predictive distribution $p(z_t|y_{1:t-1})$.

For the update step, one may need to first find a Gaussian approximation to the joint distribution of the augmented state $z_t$ and observation $y_t$ conditioned on $y_{1:t-1}$ (see also Eq. (7))

$$p(z_t, y_t|y_{1:t-1}) \approx \mathcal{N}\left(\begin{bmatrix} m_{t|t-1}^z \\ m_{t|t-1}^y \end{bmatrix}, \begin{bmatrix} \Sigma_{t|t-1}^z & \Sigma_{t|t-1}^{zy} \\ \Sigma_{t|t-1}^{yz} & \Sigma_{t|t-1}^y \end{bmatrix}\right). \quad (29)$$

The mean and the covariance of the latent state $z_t$ are known from the prediction step, while their equivalents of the emission $y_t$ are available as

$$m_{t|t-1}^y = \mathbb{E}[g(x_t)], \Sigma_{t|t-1}^y = \text{Cov}[g(x_t)] + \text{diag}(r), \quad (30)$$

with $x_t \sim \mathcal{N}(m_{t|t-1}^x, \Sigma_{t|t-1}^x)$.

These moments can be approximated with layerwise moment propagation, as described in the previous section. Finally, one may facilitate the computation of the cross-covariance $\Sigma_{t|t-1}^{yz}$ by using Stein's lemma

$$\Sigma_{t|t-1}^{yz} = \text{Cov}[g(x_t), z_t] = \mathbb{E}[\nabla_{x_t} g(x_t)]\Sigma_{t|t-1}^{xz}. \quad (31)$$

where the expected Jacobian $\mathbb{E}[\nabla_{x_t} g(x_t)]$ of the mean emission function cannot be computed analytically. By way of approximation, the computation may be reduced to estimate the expected Jacobian per layer. The latter is often available in closed form, or close approximations exist.

Once the joint distribution is calculated, one may approximate the conditional as another normal distribution, $p(z_t|y_{1:t}) \approx \mathcal{N}(m_t^z, \Sigma_t^z)$, as shown in Eq. (11). For the global approach, the Kalman gain has the structure $K_t = \Sigma_t^{zy}(\Sigma_t^y)^{-1}$, and the updated covariance matrix $\Sigma_t^z$ of augmented state $z_t$ is dense. As a consequence, the weights $w_t$ have a non-zero correlation after the update, and the overall variance is reduced. For the local approach, only the distribution of the states $x_t$ will be updated since the lower block of the gain matrix is zero. The weight distribution, as well as the cross-covariance between the states and weights, is hence not affected by the Kalman step.

*Training.* One may train the ProDSSMs by fitting the hyperparameters $\phi$ to a dataset $\mathcal{D}$. The hyperparameters $\phi$ describe the weight distribution. For the sake of brevity, the shorthand notation $p(w_{0:T}|\phi) = p(w|\phi)$ is introduced to refer to the weights at all time steps with arbitrary horizon T. The ProDSSM may be trained on a Type-II *Maximum A Posteriori* (MAP) objective

$$\underset{\phi}{\text{argmax}}\log \int p(\mathcal{D}|w)p(w|\phi)dw + \log p(\phi). \quad (32)$$

This objective is also termed as predictive variational Bayesian inference as it directly minimizes the Kullback-Leibler divergence between the true data generating distribution and the predictive distribution, which is to be learned. Compared to other learning objectives, Eq. (32) provides better predictive performance, is more robust to model misspecification, and provides a beneficial implicit regularization effect for over-parameterized models.

The typically hard to evaluate likelihood $p(\mathcal{D}|\phi) = \int p(D|w)p(w|\phi)dw$ may be closely approximated with deterministic moment matching routines. The exact form of the likelihood hereby depends on the task at hand, and elsewhere in this specification it is shown how the likelihood can be closely approximated for regression problems and for dynamical system modeling.

What remains is defining the hyper-prior $p(\phi)$. Here, $\phi$ defines the weight distribution that is defined by its two first moments $m^w = m^w_{0:T}$ and $\Sigma^w = \Sigma^w_{0:T}$. In order to arrive at an analytical objective, one may model each entry in $p(\phi)$ independently. One may define the hyper-prior of the $i$-th entry of the mean as a standard Normal

$$\log p(m^w_i) = \log \mathcal{N}(m^w_i|0,I)$$

$$= -\frac{1}{2}(m^w_i)^2 + \text{const.} \quad (33)$$

and, assuming that the covariance is diagonal, chose the Gamma distribution for the $(i, i)$-th covariance entry

$$\log p(\Sigma^w_{ii}) = \log \text{Ga}(\Sigma^w_{ii}|\alpha = 1.5, \beta = 0.5)$$

$$= \frac{1}{2}\log\Sigma^w_{ii} - \frac{1}{2}\Sigma^w_{ii} + \text{const.,} \quad (34)$$

where $\alpha$ is the shape parameter and $\beta$ is the rate parameter. One may insert the above hyper-prior of the mean and covariance into $\log p(\phi)$ and arrive at

$$\log p(\phi) = \log p(m^w) + \log p(\Sigma^w)$$

$$= \frac{1}{2}\sum_{i=1}^{D_w}\log\Sigma^w_{ii} - (m^w_i)^2 - \Sigma^w_{ii} + \text{const.,} \quad (35)$$

which leads to a total of $2D_w$ hyperparameters, e.g., one for the mean and one for the variance of each weight.

In contrast, the classical Bayesian formalism keeps the prior $p(w|\phi)$ constant during learning and the posterior $p(w|D)$ is the quantity of interest. As an analytical solution to the posterior is intractable, either Markov Chain Monte Carlo (MCMC) or Variational Inference (VI) may be used.

*Predictive Distribution.* During test time, that is, for inferences purposes, the predictive distribution $p(y_t|y_{-H:0})$ at time step $t$ conditioned on the observations $y_{-H:0} = \{y_{-H}, ...,y_0\}$ with conditioning horizon $H \in \mathbb{N}_+$ is of interest. The predictive distribution is computed as

$$p(y_t|y_{-H:0}) = \int p(y_t|z_t)p(z_t|z_0)p(z_0|y_{-H:0})dz_0, z_t,$$

$$= \int p(y_t|z_t)p(z_t|y_{-H:0})dz_t. \quad (36)$$

Above, $p(z_0|y_{-H:0})$ is the filtering distribution, $p(z_t|z_0)$ is the $t$-step transition kernel and $p(z_t|y_{-H:0})$ the $t$-step marginal.

The computation of the predictive distribution may be performed by a series of Gaussian approximations:

$$p(y_t|y_{-H:0}) \approx \int p(y_t|z_t)p(z_t|z_0)\mathcal{N}(m_0^z, \Sigma_0^z)dz_0, z_t$$

$$\approx \int p(y_t|z_t)\mathcal{N}(m_{t|0}^z, \Sigma_{t|0}^z)dz_t$$

$$\approx \mathcal{N}(m_{t|0}^y, \Sigma_{t|0}^y), \qquad (37)$$

where the density $\mathcal{N}(m_0^z, \Sigma_0^z)$ approximates the filtering distribution. Its computation is described in this specification.

One may obtain the density $\mathcal{N}(m_{t|0}^z, \Sigma_{t|0}^z)$ as an approximation to the $t$-step marginal kernel $p(z_t|y_{-H:0})$ in Eq. (36) by propagating the augmented latent state forward in time as described elsewhere. Finally, one may approximate the predictive distribution $p(y_t|y_{-H:0})$ with the density $\mathcal{N}(m_{t|0}^y, \Sigma_{t|0}^y)$ in Eq. (37), which can be done by another round of moment matching as also outlined in Eq. (30).

Pseudo-code is provided below for approximating the predictive distribution in Alg. 1 that relies on Alg. 2 to approximate the filtering distribution $p(z_0|y_{-H:0}) \approx \mathcal{N}(z_0|m_0^z, \Sigma_0^z)$. Both algorithms explicitly do a resampling step for the local weight setting. In practice, it is not necessary, and the calculation may be omitted.

### Algorithm 1: Deterministic Inference (DetInf)

**Inputs:**

| | |
|---|---|
| $f(x_t, w_t)$ | Mean update |
| $l(x_t, w_t)$ | Covariance update |
| $g(x_t)$ | Mean emission |
| $r$ | Covariance emission |
| $p(z_{-H})$ | Initial distribution |
| $y_{-H:0}$ | Observations |

**Outputs:**

| | |
|---|---|
| $p(y_T|y_{-H:0}) \approx \mathcal{N}(y_T|m_{T|0}^y, \Sigma_{T|0}^y)$ | Predictive Distribution |

$m_0^z, \Sigma_0^z \leftarrow \text{DetFilt}(f, l, g, r, p(z_{-H}), y_{-H:0})$

**for** time step $t \in \{0, \cdots, T-1\}$ **do**

  **if** Local **then**

    $m_{t|0}^w, \Sigma_{t|0}^w, \Sigma_{t|0}^{xw}, \Sigma_{t|0}^{wx} \leftarrow m_{-H}^w, \Sigma_{-H}^w, 0, 0$    Resample

  **end if**

  $m_{t+1|0}^z \leftarrow \mathbb{E}[F(z_t)]$        Eq. 20

  $\Sigma_{t+1|0}^z \leftarrow \text{Cov}[F(z_t)] + \text{diag}(\mathbb{E}[L(z_t)])$      Eq. 20

  $p(z_{t+1}|y_{-H:0}) \leftarrow \mathcal{N}(z_{t+1}|m_{t+1|0}^z, \Sigma_{t+1|0}^z)$

**end for**

$$m^y_{T|0} \leftarrow \mathbb{E}[g(x_T)] \qquad \text{Eq. 30}$$

$$\Sigma^y_{T|0} \leftarrow \text{Cov}[g(x_T)] + \text{diag}(r) \qquad \text{Eq. 30}$$

**return** $\mathcal{N}(y_T|m^y_{T|0}, \Sigma^y_{T|0})$

Algorithm 2: Deterministic Filtering (DetFilt)

**Inputs:**

| | |
|---|---|
| $f(x_t, w_t)$ | Mean update |
| $l(x_t, w_t)$ | Covariance update |
| $g(x_t)$ | Mean emission |
| $r$ | Covariance emission |
| $p(z_0)$ | Initial distribution |
| $y_{1:T}$ | Observations |

**Outputs:**

| | |
|---|---|
| $p(z_T|y_{1:T}) \approx \mathcal{N}(z_T|m^z_T, \Sigma^z_T)$ | Filtering Distribution |

$p(z_0|y_{1:0}) \leftarrow p(z_0)$

**for** time step $t \in \{0, \cdots, T-1\}$ **do**

    **if** Local **then**

$$m^w_t, \Sigma^w_t, \Sigma^{xw}_t, \Sigma^{wx}_t \leftarrow m^w_0, \Sigma^w_0, 0, 0 \qquad \text{Resample}$$

    **end if**

$$m^z_{t+1|t} \leftarrow \mathbb{E}[F(z_t)] \qquad \text{Eq. 20}$$

$$\Sigma^z_{t+1|t} \leftarrow \text{Cov}[F(z_t)] + \text{diag}(\mathbb{E}[L(z_t)]) \qquad \text{Eq. 20}$$

$$m^y_{t+1|t} \leftarrow \mathbb{E}[g(x_t)] \qquad \text{Eq. 30}$$

$$\Sigma^y_{t+1|t} \leftarrow \text{Cov}[g(x_t)] + \text{diag}(r) \qquad \text{Eq. 30}$$

$$\Sigma^{yz}_{t+1|t} \leftarrow \mathbb{E}[\nabla_{x_{t+1}} g(x_{t+1})] \Sigma^{xz}_{t+1|t} \qquad \text{Eq. 31}$$

$$K_{t+1} \leftarrow \Sigma^{zy}_{t+1|t} (\Sigma^y_{t+1|t})^{-1} \qquad \text{Eq. 11}$$

$$m^z_{t+1} \leftarrow m^z_{t+1|t} + K_{t+1}(y_{t+1} - m^y_{t+1|t}) \qquad \text{Eq. 9}$$

$$\Sigma^z_{t+1} \leftarrow \Sigma^z_{t+1|t} - K_{t+1} \Sigma^y_{t+1|t} K^T_{t+1} \qquad \text{Eq. 10}$$

$$p(z_{t+1}|y_{1:t+1}) \leftarrow \mathcal{N}(z_{t+1}|m^z_{t+1}, \Sigma^z_{t+1})$$

**end for**

**return** $\mathcal{N}(z_T|m^z_T, \Sigma^z_T)$

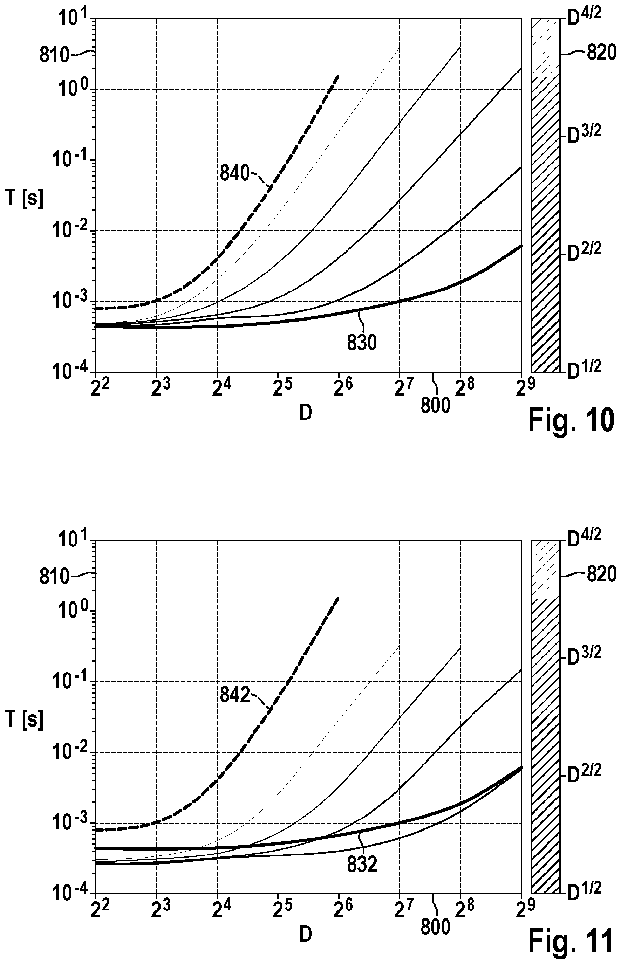

*Measured Runtime.* In Figs. 10 and 11, the runtime of approximating mean $m^y_{t+1}$ and covariance $\Sigma^y_{t+1}$ of the observation $y_{t+1}$ conditioned on the augmented state $z_t$ at the prior time step with mean $m^z_t$ and covariance $\Sigma^z_t$ is visualized. On the x-axis 800, the dimensionality D is varied. The same dimensionality is used for the observation $y_t$ and latent state $x_t$, i.e., $D_x = D_y = D$. Randomly initialized transition and emission functions are used with one hidden layer of width $H = D$. The solid line 830, 832 represents the runtime of the deterministic approximation for local weights while the dashed line 840, 842 represents the deterministic approximation for global weights. The lines with different intensities, as shown on the scale 820, represent the runtime of the MC approximation with varying number of particles $S$ as a function of dimensionality $D$. In Fig. 10, the runtime of the weight sampling procedure is taken into account for the MC baseline, while in Fig. 11, the runtime of the weight sampling procedure is ignored.

*Experiments.* The presently disclosed model family ProDSSM is a natural choice for dynamical system modeling, where the aim is to learn the underlying dynamics from a dataset $\mathcal{D} = \{Y^n\}_{n=1}^N$ consisting of $N$ trajectories. For simplicity, it is assumed that each trajectory $Y^n = \{y_t^n\}_{t=1}^T$ is of length $T$. Using the chain rule, the likelihood term $p(\mathcal{D}|\phi)$ in Eq. (32) can be written as

$$p(\mathcal{D}|\phi) = \prod_{n=1}^N \prod_{t=1}^{T-1} p(y_{t+1}^n|y_{1:t}^n, \phi), \qquad (40)$$

where the predictive distribution $p(y_{t+1}^n|y_{1:t}^n, \phi)$ can be approximated in a deterministic way as discussed elsewhere in this specification.

The presently disclosed model family is benchmarked on two different datasets. The first dataset is a well-established learning task with synthetic non-linear dynamics, and the second dataset is a challenging real-world dataset.

*i) Kink* [https://arxiv.org/pdf/1906.05828.pdf]: Three datasets are constructed with varying degrees of difficulty by varying the emission noise level. The transition density is given by $\mathcal{N}(x_{t+1}|f_{kink}(x_t), 0.05^2)$ where $f_{kink}(x_t) = 0.8 + (x_t + 0.2)[1 - 5/(1 + e^{-2x_t})]$ is the kink function. The emission density is defined as $\mathcal{N}(y_t|x_t, r)$, where r is varied between {0.008,0.08,0.8}. For each value of $r$, 10 trajectories are simulated of length $T = 120$. 10 training runs are performed where each run uses data from a single simulated trajectory only. The mean function is realized with a neural net with one hidden layer and 50 hidden units, and the variance as a trainable constant. For MC based ProDSSM variants, 64 samples are used during training. The cost of the deterministic approximation for the local approach is $\approx$50 samples.

The performance of the different methods is compared with respect to epistemic uncertainty, i.e., parameter uncertainty, by evaluating if the learned transition model $p(x_{t+1}|x_t)$ covers the ground-truth dynamics. In order to calculate NLL and MSE, 70 evaluation points are placed on an equally spaced grid between the minimum and maximum latent state of the ground truth time series and approximate for each point $x_t$ the mean $\mathbb{E}[x_t] = \int f(x_t, w_t) p(w_t) dw_t$ and variance $\mathrm{Var}[x_t] = \int (f(x_t, w_t) - \mathbb{E}[x_t])^2 p(w_t) dw_t$ using 256 Monte Carlo samples.

*ii) Mocap* : The data is available http://mocap.cs.cmu.edu/here. It consists of 23 sequences from a single person. 16 sequences are used for training, 3 for validation, and 4 for testing. Each sequence consists of measurements from 50 different sensors. A residual connection is added to the transition density, i.e., $x_t + f(x_t, w_t)$ is used instead of $f(x_t, w_t)$ in Eq. 14. For MC based ProDSSM variants, 32 samples are used during training and 256 during testing. The cost of the deterministic approximation for the local approach is approximately 24 samples. For numerical comparison, NLL and MSE are computed on the test sequences.

*Baselines.* The same ProDSSM variants are used as previously described with reference to deep stochastic layers. Additionally, the performance is compared against well-established baselines from GP and neural net based dynamical modeling literature: VCDT, Laplace GP, ODE2VAE, and E-PAC-Bayes-Hybrid.

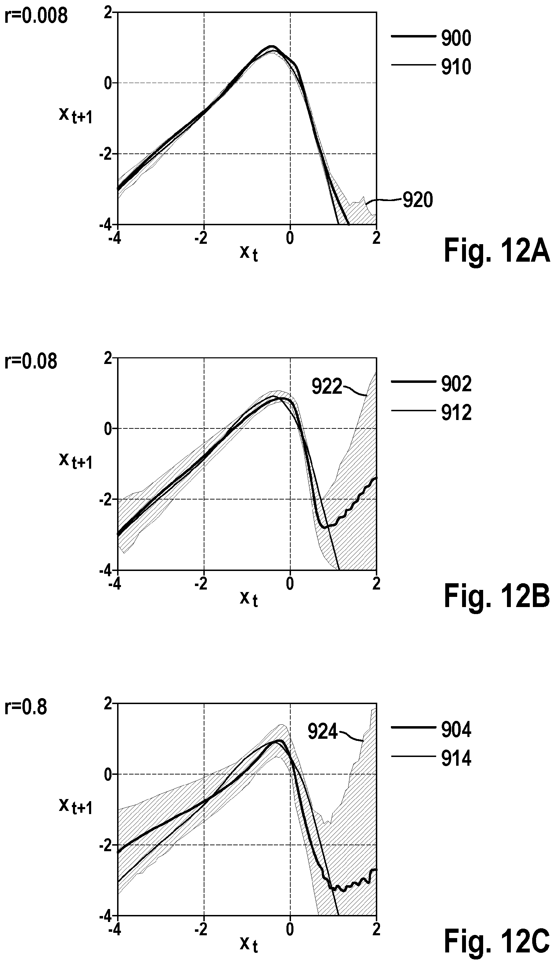

For the kink dataset, the learned transition model of the ProDSSM model visualized in **Figs. 12A-12C,** which show epistemic uncertainty 900 as a function of noise level. In particular, each of Figs. 12A-12C shows the true mean function $f(x_t)$ 910-914, the expected value of the learned mean function 900-904, and the 95% confidence intervals 920-924. It can be seen that the confidence intervals 920-924 capture the true transition function well, and the epistemic uncertainty increases with increasing noise levels.

In general, for low ($r = 0.008$) and middle emission noise ($r = 0.08$), all ProDSSM variants achieve on par performance with existing GP based dynamical models and outperform ODE2VAE. For high emission noise ($r = 0.08$), the ProDSSM variants perform significantly better than previous approaches. The MC variants achieve for low and middle noise levels the same performance as the deterministic variants. As the noise is low, there is little function uncertainty, and few MC samples are sufficient for accurate approximations of the moments. If the emission noise is high, the marginalization over the latent states and the weights becomes more demanding, and the MC variant is outperformed by its deterministic counterpart. Furthermore, it is observed that for high observation noise, the local weight variant of the ProDSSM model achieves lower NLL than the global variant.

On the Mocap dataset, the best-performing ProDSSM variant from the previous experiments, which is the local weight variant together with the deterministic inference algorithm, is able to outperform all baselines. This is despite the fact that E-PAC-Bayes-Hybrid uses an additional dataset from another motion-capture task. Compared to the kink dataset, the differences between the MC and deterministic ProDSSM variants become more prominent: the Mocap dataset is high dimensional, and hence more MC samples are needed for accurate approximations.

The experiments have demonstrated that the presently disclosed model family, ProDSSM, performs favorably compared to state-of-the-art alternatives over a wide range of scenarios. Its benefits become especially pronounced when tackling complex datasets characterized by high noise levels or a high number of output dimensions.

Examples, embodiments or optional features, whether indicated as non-limiting or not, are not to be understood as limiting the invention as claimed.

Mathematical symbols and notations are provided for facilitating the interpretation of the invention and shall not be construed as limiting the claims.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (200) for generating a state-space model of a technical system to enable model-predictive control of the technical system, comprising:

   - providing a state-space model (210) which is comprised of one or more neural networks to represent a transition function and an observation function of the state-space model;
   - obtaining training data (220) which comprises partial observations of a latent state of the technical system at a plurality of time steps;
   - training (230) the state-space model on the training data to be able to predict a latent state of the technical system based on past partial observations, wherein said prediction of the latent state is in form of a partial observation of the latent state, wherein the state-space model is configured to stochastically model the technical system by modelling uncertainties both in latent states of the technical system and in weights of the one or more neural networks, wherein:

      the transition function is configured to map an augmented state to a next augmented state at a following time step, wherein the augmented state is comprised of a latent state of the technical system and weights of the one or more neural networks,
      the observation function is configured to map the augmented state to a partial observation,
      a filtering distribution, which is used during prediction and update steps of the training, is configured to represent a distribution of the augmented state;
      wherein each of the transition function, the observation function, and the filtering distribution is approximated by a normal probability distribution, and the training comprises recursively calculating a first moment and second moment of each of the transition function, the observation function, and the filtering distribution at each time step by moment matching (240-250) across neural network layers.

2. The method (200) according to claim 1, further comprising providing and training a separate neural network to represent each of the first moment and second moment of the transition function and each of the first moment and second moment of the observation function.

3. The method (200) according to claim 1 or 2, further comprising resampling the weights of the one or more neural networks at each time step.

4. The method (200) according to claim 1 or 2, further comprising sampling the weights of the one or more neural networks at an initial time step while omitting resampling the weights at subsequent time steps.

5. The method (200) according to any one of claims 1 to 4, further comprising using a deterministic training objective during the training, for example based on a type II maximum a posteriori criterion.

6. The method (200) according to any one of claims 1 to 5, further comprising:

   - determining a predictive distribution as an integral function of the transition function, the observation function, and the filtering distribution and by using moment matching across neural network layers;
   - deriving a prediction uncertainty from the predictive distribution;
   - if the prediction uncertainty exceeds a threshold, prompting or exploring for additional training data to reduce the prediction uncertainty.

7. The method (200) according to any one of claims 1 to 6, wherein the training data comprises one or more time-series of sensor data representing the partial observations of the latent state of the technical system, wherein the sensor data is obtained from an internal sensor of the technical system and/or from an external sensor observing the technical system or an environment of the technical system.

8. A computer-implemented method (500) for model-predictive control of a technical system, comprising:

   - providing (510) a state-space model as generated by the method of any one of claims 1 to 7;
   - obtaining (520) sensor data representing past partial observations of a latent state of the technical system at a plurality of time steps;
   - generating (530) a prediction of a latent state of the technical system, in form of a prediction of a partial observation of the latent state, based on the past partial observations, comprising approximating a predictive distribution as an integral function of the transition function, the observation function, and the filtering distribution and by using moment matching across neural network layers, and deriving the prediction from the predictive distribution; and
   - controlling (540) the technical system based on the prediction.

9. The method (500) according to claim 8, further comprising deriving a prediction uncertainty from the predictive distribution, wherein the control of the technical system is further based on the prediction uncertainty.

10. The method (500) according to claim 9, further comprising, if the prediction uncertainty exceeds a threshold:

   - refraining from performing an action associated with the prediction;
   - operating the technical system in a safe mode;
   - triggering an alert;
   - increasing a sampling rate of the sensor data; and/or
   - switching from the model-predictive control to another type of control.

11. A transitory or non-transitory computer-readable medium (600) comprising data (610) representing instructions arranged to cause a processor system to perform the computer-implemented method according to any one of claims 1 to 10.

12. A training system (100) for training a state-space model to enable model-predictive control of a technical system, wherein the training system comprises a processor subsystem (120) configured to perform the method according to any one of claims 1 to 7.

13. A control system (300) for model-predictive control of a technical system, wherein the control system comprises a processor subsystem (320) configured to perform the method according to any one of claims 8 to 11.

14. The control system (300) according to claim 13, further comprising at least one of:

   - a sensor interface (360) to obtain the sensor data; and
   - a control interface (370) to control an actuator of or acting upon the technical system.

15. A technical system comprising the control system (300) according to claim 13 or 14, wherein the technical system is, or is a component of, a computer-controlled machine, such as a robotic system, a vehicle (410), a domestic appliance, a power tool, a manufacturing machine, a personal assistant, or an access control system.

**Amended claims in accordance with Rule 137(2) EPC.**

**1.** A computer-implemented method (200) for generating a state-space model of a technical system configured for model-predictive control of the technical system, comprising:

- providing a state-space model (210) which is comprised of one or more neural networks to represent a transition function and an observation function of the state-space model;
- obtaining training data (220) which comprises partial observations of a latent state of the technical system at a plurality of time steps;
- training (230) the state-space model on the training data to be able to predict a latent state of the technical system based on past partial observations, wherein said prediction of the latent state is in form of a partial observation of the latent state, wherein the state-space model is configured to stochastically model the technical system by modelling uncertainties both in latent states of the technical system and in weights of the one or more neural networks, wherein:

  the transition function is configured to map an augmented state to a next augmented state at a following time step, wherein the augmented state is comprised of a latent state of the technical system and weights of the one or more neural networks,
  the observation function is configured to map the augmented state to a partial observation,
  a filtering distribution, which is used during prediction and update steps of the training, is configured to represent a distribution of the augmented state; wherein each of the transition function, the observation function, and the filtering distribution is approximated by a normal probability distribution, and the training comprises recursively calculating a first moment and second moment of each of the transition function, the observation function, and the filtering distribution at each time step by moment matching (240-250) across neural network layers.

**2.** The method (200) according to claim 1, further comprising providing and training a separate neural network to represent each of the first moment and second moment of the transition function and each of the first moment and second moment of the observation function.

**3.** The method (200) according to claim 1 or 2, further comprising resampling the weights of the one or more neural networks at each time step.

**4.** The method (200) according to claim 1 or 2, further comprising sampling the weights of the one or more neural networks at an initial time step while omitting resampling the weights at subsequent time steps.

**5.** The method (200) according to any one of claims 1 to 4, further comprising using a deterministic training objective during the training, for example based on a type II maximum a posteriori criterion.

**6.** The method (200) according to any one of claims 1 to 5, further comprising:

- determining a predictive distribution as an integral function of the transition function, the observation function, and the filtering distribution and by using moment matching across neural network layers;
- deriving a prediction uncertainty from the predictive distribution;
- if the prediction uncertainty exceeds a threshold, prompting or exploring for additional training data to reduce the prediction uncertainty.

**7.** The method (200) according to any one of claims 1 to 6, wherein the training data comprises one or more time-series of sensor data representing the partial observations of the latent state of the technical system, wherein the sensor data is obtained from an internal sensor of the technical system and/or from an external sensor observing the technical system or an environment of the technical system.

**8.** A computer-implemented method (500) for model-predictive control of a technical system, comprising:

- providing (510) a state-space model as generated by the method of any one of claims 1 to 7;
- obtaining (520) sensor data representing past partial observations of a latent state of the technical system at a plurality of time steps;
- generating (530) a prediction of a latent state of the technical system, in form of a prediction of a partial observation of the latent state, based on the past partial observations, comprising approximating a predictive distribution as an integral function of the transition function, the observation function, and the filtering distribution and by using moment matching across neural network layers, and deriving the prediction from the predictive distribution; and
- controlling (540) the technical system based on the prediction.

**9.** The method (500) according to claim 8, further comprising deriving a prediction uncertainty from the predictive distribution, wherein the control of the technical system is further based on the prediction uncertainty.

**10.** The method (500) according to claim 9, further comprising, if the prediction uncertainty exceeds a threshold:

- refraining from performing an action associated with the prediction;
- operating the technical system in a safe mode;
- triggering an alert;
- increasing a sampling rate of the sensor data; and/or
- switching from the model-predictive control to another type of control.

**11.** A transitory or non-transitory computer-readable medium (600) comprising data (610) representing instructions arranged to cause a processor system to perform the computer-implemented method according to any one of claims 1 to 10.

**12.** A training system (100) for training a state-space model to enable model-predictive control of a technical system, wherein the training system comprises a processor subsystem (120) configured to perform the method according to any one of claims 1 to 7.

**13.** A control system (300) for model-predictive control of a technical system,
wherein the control system comprises a processor subsystem (320) configured to perform the method according to any one of claims 8 to 11.

**14.** The control system (300) according to claim 13, further comprising at least one of:

- a sensor interface (360) to obtain the sensor data; and
- a control interface (370) to control an actuator of or acting upon the technical system.

**15.** A technical system comprising the control system (300) according to claim 13 or 14, wherein the technical system is, or is a component of, a computer-controlled machine, such as a robotic system, a vehicle (410), a domestic appliance, a power tool, a manufacturing machine, a personal assistant, or an access control system.

**1.** A computer-implemented method (500) for model-predictive control of a technical system, comprising:

- providing a state-space model (210) which is comprised of one or more neural networks to represent a transition function and an observation function of the state-space model;
- obtaining training data (220) which comprises partial observations of a latent state of the technical system at a plurality of time steps;
- training (230) the state-space model on the training data to be able to predict a latent state of the technical system based on past partial observations, wherein said prediction of the latent state is in form of a partial observation of the latent state, wherein the state-space model is configured to stochastically model the technical system by modelling uncertainties both in latent states of the technical system and in weights of the one or more neural networks, wherein:

the transition function is configured to map an augmented state to a next augmented state at a following time step, wherein the augmented state is comprised of a latent state of the technical system and weights of the one or more neural networks,
the observation function is configured to map the augmented state to a partial observation,

a filtering distribution, which is used during prediction and update steps of the training, is configured to represent a distribution of the augmented state;

wherein each of the transition function, the observation function, and the filtering distribution is approximated by a normal probability distribution, and the training comprises recursively calculating a first moment and second moment of each of the transition function, the observation function, and the filtering distribution at each time step by moment matching (240-250) across neural network layers,

- obtaining (520) sensor data representing past partial observations of a latent state of the technical system at a plurality of time steps;
- generating (530) a prediction of a latent state of the technical system, in form of a prediction of a partial observation of the latent state, based on the past partial observations, comprising approximating a predictive distribution as an integral function of the transition function, the observation function, and the filtering distribution and by using moment matching across neural network layers, and deriving the prediction from the predictive distribution; and
- controlling (540) the technical system based on the prediction.

**2.** The method (200) according to claim 1, further comprising providing and training a separate neural network to represent each of the first moment and second moment of the transition function and each of the first moment and second moment of the observation function.

**3.** The method (200) according to claim 1 or 2, further comprising resampling the weights of the one or more neural networks at each time step.

**4.** The method (200) according to claim 1 or 2, further comprising sampling the weights of the one or more neural networks at an initial time step while omitting resampling the weights at subsequent time steps.

**5.** he method (200) according to any one of claims 1 to 4, further comprising using a deterministic training objective during the training, for example based on a type II maximum a posteriori criterion.

**6.** The method (200) according to any one of claims 1 to 5, further comprising:

- determining a predictive distribution as an integral function of the transition function, the observation function, and the filtering distribution and by using moment matching across neural network layers;
- deriving a prediction uncertainty from the predictive distribution;
- if the prediction uncertainty exceeds a threshold, prompting or exploring for additional training data to reduce the prediction uncertainty.

**7.** The method (200) according to any one of claims 1 to 6, wherein the training data comprises one or more time-series of sensor data representing the partial observations of the latent state of the technical system, wherein the sensor data is obtained from an internal sensor of the technical system and/or from an external sensor observing the technical system or an environment of the technical system.

**8.** The method (500) according to claim 1-7, further comprising deriving a prediction uncertainty from the predictive distribution, wherein the control of the technical system is further based on the prediction uncertainty.

**9.** The method (500) according to claim 8, further comprising, if the prediction uncertainty exceeds a threshold:

- refraining from performing an action associated with the prediction;
- operating the technical system in a safe mode;
- triggering an alert;
- increasing a sampling rate of the sensor data; and/or
- switching from the model-predictive control to another type of control.

**10.** A transitory or non-transitory computer-readable medium (600) comprising data (610) representing instructions arranged to cause a processor system to perform the computer-implemented method according to any one of claims 1 to 9.

**11.** A training system (100) for training a state-space model to enable model-predictive control of a technical system, wherein the training system comprises a processor subsystem (120) configured to perform the method according to any one of claims 1 to 7.

**12.** A control system (300) for model-predictive control of a technical system, wherein the control system comprises a processor subsystem (320) configured to perform the method according to any one of claims 1 to 10.

**13.** The control system (300) according to claim 12, further comprising at least one of:

- a sensor interface (360) to obtain the sensor data; and
- a control interface (370) to control an actuator of or acting upon the technical system.

**14.** A technical system comprising the control system (300) according to claim 12 or 13, wherein the technical system is, or is a component of, a computer-controlled machine, such as a robotic system, a vehicle (410), a domestic appliance, a power tool, a manufacturing machine, a personal assistant, or an access control system.

Fig. 1

Fig. 2

Fig. 3

400

410

422

300

432 M

**Fig. 4**

500

510

520

530

540

**Fig. 5**

**Fig. 6**

**Fig. 7**

Fig. 8

Fig. 9

Fig. 10

Fig. 11

Fig. 12A

Fig. 12B

Fig. 12C

Europäisches
Patentamt

European
Patent Office

Office européen
des brevets

# EUROPEAN SEARCH REPORT

**Application Number**

EP 23 19 5776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/222597 A1 (GOOGLE LLC [US]) 21 November 2019 (2019-11-21) | 1-7,11, 12 | INV. G05B13/02 |
| A | * paragraph [0021] – paragraph [0025] * <br> * paragraph [0039] – paragraph [0044] * <br> ----- | 8-10, 13-15 | G05B13/04 |
| A | US 2021/165375 A1 (ZHAO JINXIN [US] ET AL) 3 June 2021 (2021-06-03) <br> * paragraph [0022] * <br> * paragraph [0030] * <br> ----- | 1 | |
| A | US 2021/041127 A1 (RISBECK MICHAEL J [US] ET AL) 11 February 2021 (2021-02-11) <br> * paragraph [0003] – paragraph [0007] * <br> * paragraph [0159] – paragraph [0162] * <br> ----- | 1 | |
| A | US 2021/011447 A1 (NGUYEN-TUONG THE DUY [DE] ET AL) 14 January 2021 (2021-01-14) <br> * paragraph [0007] * <br> * paragraph [0024] * <br> * paragraph [0039] – paragraph [0042] * <br> ----- | 1 | |

**TECHNICAL FIELDS SEARCHED (IPC)**

G05B
G06N

The present search report has been drawn up for all claims

| Place of search | Date of completion of the search | Examiner |
|---|---|---|
| The Hague | 6 February 2024 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 5776**

This annex lists the patent family members relating to the patent documents cited in the above-mentioned European search report.
The members are as contained in the European Patent Office EDP file on
The European Patent Office is in no way liable for these particulars which are merely given for the purpose of information.

**06-02-2024**

| Patent document cited in search report | Publication date | Patent family member(s) | Publication date |
|---|---|---|---|
| WO 2019222597 A1 | 21-11-2019 | CN 112135717 A<br>EP 3793783 A1<br>US 2021205984 A1<br>WO 2019222597 A1 | 25-12-2020<br>24-03-2021<br>08-07-2021<br>21-11-2019 |
| US 2021165375 A1 | 03-06-2021 | CN 112906882 A<br>US 2021165375 A1 | 04-06-2021<br>03-06-2021 |
| US 2021041127 A1 | 11-02-2021 | NONE | |
| US 2021011447 A1 | 14-01-2021 | CN 111971628 A<br>DE 102018201411 A1<br>EP 3746850 A1<br>US 2021011447 A1<br>WO 2019149664 A1 | 20-11-2020<br>01-08-2019<br>09-12-2020<br>14-01-2021<br>08-08-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DE BÉZENAC et al.** Normalizing Kalman Filters for Multivariate Time Series Analysis,. *NeurIPS*, 2020